Europäisches Patentamt

European Patent Office

Office européen des brevets

(19)

(11) Veröffentlichungsnummer: **0 075 917**
**B1**

(12) **EUROPÄISCHE PATENTSCHRIFT**

(45) Veröffentlichungstag der Patentschrift:
10.04.85

(21) Anmeldenummer: 82108938.0

(22) Anmeldetag: 27.09.82

(51) Int. Cl.⁴: **G 02 B 6/24**

(54) **Schalter für Lichtleiter.**

(30) Priorität: **29.09.81 DE 3138686**

(43) Veröffentlichungstag der Anmeldung:
06.04.83 Patentblatt 83/14

(45) Bekanntmachung des Hinweises auf die Patenterteilung:
10.04.85 Patentblatt 85/15

(84) Benannte Vertragsstaaten:
**CH FR GB LI**

(56) Entgegenhaltungen:
**DE - A - 2 903 848**
**DE - A - 2 903 867**
**DE - A - 2 903 870**

(73) Patentinhaber: **Siemens Aktiengesellschaft, Berlin und München Wittelsbacherplatz 2, D-8000 München 2 (DE)**

(72) Erfinder: **Bruch, Helmut, Ing. grad., Päwesiner Weg 33, D-1000 Berlin 20 (DE)**
Erfinder: **Malorny, Bertold, Ing. grad., Damwildsteig 3, D-1000 Berlin 27 (DE)**

ACTORUM AG

## Beschreibung

Die Erfindung bezieht sich auf einen Schalter zum Trennen und Schliessen eines optischen Kontaktes zwischen zwei im wesentlichen zueinander fluchtenden Lichtleiterenden.

Durch die deutsche Offenlegungsschrift Nr. 2903867 ist ein Schalter für Lichtleiter bekannt geworden, bei dem das Feststehende Lichtleiterende an einem im Schalter befestigten Trägerteil gehalten ist. Das transversal bewegbare Lichtleiterende ist an einer auslenkbaren Schaltzunge befestigt, die mit ihrem freien Ende dem Trägerteil zugewandt ist. Im geschlossenen Schaltzustand stehen sich die beiden Lichtleiterenden genau fluchtend gegenüber. Um dieses zu erreichen, sind relativ aufwendige Massnahmen sowohl zur seitlichen Führung der Lichtleiter wie auch zur Abstimmung in Auslenkrichtung erforderlich.

Der Erfindung liegt die Aufgabe zugrunde, einen Schalter zu schaffen, bei dem in einfacher und kostengünstiger Weise eine genaue Fluchtung der Lichtleiterenden erreicht werden kann.

Diese Aufgabe wird durch die Erfindung gemäss Anspruch 1 gelöst. Dadurch, dass die Schaltzunge und das Trägerteil in einem gemeinsamen Haltekörper vereinigt sind, ist es möglich, beide Lichtleiterenden in einem Arbeitsgang an dem Haltekörper zu befestigen. In einer Hilfsvorrichtung mit einer durchgehenden seitlichen Anlagekante für die Lichtleiter lassen sich diese genau aufeinander ausrichten und in dieser Stellung z. B. durch Kleben an dem Haltekörper befestigen. Nach Aushärten des Klebers sind die Lichtleiter seitlich genau aufeinander ausgerichtet. Dabei spielt ihre Lage und Orientierung auf dem Haltekörper nur eine untergeordnete Rolle. Ein Ausrichten der Schaltzunge und des Trägerteils zueinander ist nicht mehr erforderlich. Die z. B. aus dem Federblech des Haltekörpers freigestanzte Schaltzunge liegt in der geschlossenen Schaltstellung zusammen mit dem Trägerteil an der gemeinsamen ebenen Auflagefläche des Grundkörpers auf. Sind die Lichtleiter auf dieser Seite des Haltekörpers angeordnet, so sind auch die beiden Lichtleiterenden genau aufeinander ausgerichtet. Befinden sich die Lichtleiter auf der dem Grundkörper abgewandten Seite des Haltekörpers, so trifft dies ebenfalls zu, da die Materialstärke des Trägerteils und der Schaltzunge in diesem Bereich aufgrund ihres geringen Abstandes praktisch gleich ist. Bei der Kopplung der beiden Lichtleiterenden wirken sich bereits Abweichungen von wenigen hundertstel Millimetern stark dämpfend aus. Bei getrenntem Trägerteil mit Schaltzunge wären aber derartige Abweichungen aufgrund der unterschiedlichen Dicke des gewalzten Materials kaum zu vermeiden.

Weiterbildungen der Erfindung sind in den Ansprüchen 2 bis 5 gekennzeichnet:

Die Schlitzform nach Anspruch 2 lässt sich stanztechnisch in einfacher Weise verwirklichen.

Würde man den Haltekörper aus magnetisierbarem Material fertigen, so käme es über die seitlich der Schaltzunge verlaufenden Stege zu einem relativ starken magnetischen Nebenfluss. Durch die Weiterbildung nach Anspruch 3 wird dies verhindert, so dass die magnetische Flussstärke gering gehalten werden kann. Durch die Ausgestaltung der Schaltzunge nach Anspruch 4 ist es möglich, das schmalere Ankerteil an der Spitze der Schaltzunge zu befestigen, wo es die grösste Wirkung hat. Die seitlichen Lappen dienen der Auflage auf dem Grundkörper in der Höhe des freien Endes der Schaltzunge.

Durch die Weiterbildung nach Anspruch 5 lässt sich eine Brückenschaltung verwirklichen. Bei vom Grundkörper abhebender Schaltzunge ist der dem Grundkörper zugewandte Lichtleiter auf der Schaltzunge mit seinem Ende genau auf den dem Grundkörper abgewandten Lichtleiter auf dem Trägerteil ausgerichtet. Insbesondere bei dieser Weiterbildung ist die gleiche Materialstärke von Trägerteil und Schaltzunge von erheblichem Vorteil. Bei der Herstellung des Schalters ist es von besonderem Vorteil, dass alle vier Lichtleiter gleichzeitig an dem Haltekörper befestigt werden können. Dieser kann z. B. in einen genau angepassten Aufnahmeschlitz einer Hilfsvorrichtung eingesteckt werden, deren Oberseite genau senkrecht zum Schlitz verläuft. Drückt man nun die vier Lichtleiterenden in die Innenecke zwischen Haltekörper und dieser Oberfläche, so sind alle vier Lichtleiterenden seitlich genau aufeinander ausgerichtet. Wären Schaltzunge und Trägerteil getrennt, so wäre bei der Montage des Schalters noch ein erheblicher Mehraufwand für die seitliche Ausrichtung erforderlich.

Im folgenden wird die Erfindung anhand eines in der Zeichnung dargestellten Ausführungsbeispiels näher erläutert.

Fig. 1 zeigt in vergrösserter perspektivischer Darstellung einen Schalter für Lichtleiter mit zwei Lichtleiterpaaren, deren Enden in der gezeigten Schaltstellung aufeinander ausgerichtet sind, und

Fig. 2 zeigt die Lichtleiterenden mit einem Teil des Schalters in der anderen Schaltstellung.

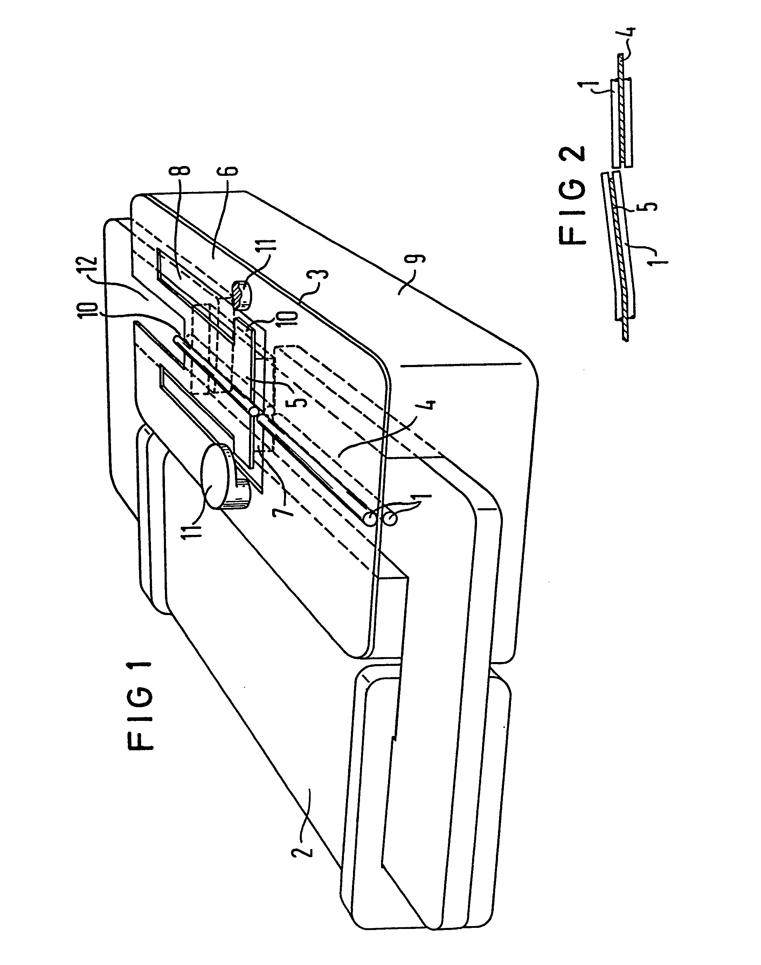

Fig. 1 zeigt einen Schalter für Lichtleiter 1, der mittels eines Elektromagneten 2 betätigbar ist. Die Lichtleiter 1 sind paarweise zu beiden Seiten eines aus nichtmagnetisierbarem Federblech bestehenden Haltekörpers 3 angeordnet. Der Haltekörper 3 besteht aus einem im Schalter festliegenden Trägerteil 4, einer auslenkbaren Schaltzunge 5 sowie seitlichen Verbindungsstegen 6, die die einstückige Ausbildung von Trägerteil 4 und Schaltzunge 5 ermöglichen. An der Schaltzunge 5 ist ein magnetisierbares Ankerteil 7 befestigt, das eine magnetische Betätigung der Schaltzunge 5 ermöglicht. Das Ankerteil 7 ist mit einer nicht erkennbaren Nut versehen, die als Freimachung für einen Lichtleiter dient. Der Haltekörper 3 ist auf überschliffenen ebenen Auflageflächen 8 eines Grundkörpers 9 flach aufgelegt. In der gezeigten Stellung liegt auch die Schaltzunge 5 mit seitlichen, lappenartigen Verbreiterungen 10 im Bereich ihres freien Endes an den Auflageflächen 8 an.

Die Lichtleiterenden 1 sind zu beiden Seiten des Haltekörpers 3 angeordnet. In der gezeigten Stellung sind die beiden auf der Schaltzunge 5 befestigten, transversal auslenkbaren Lichtleiterenden 1 genau auf die am Trägerteil 4 festliegenden Lichtleiterenden 1 ausgerichtet. Ausserdem sind sie in Schaltrichtung genau übereinander angeordnet. Mit dem Grundkörper 9 sind Anschläge 11 verbunden, die die Schaltbewegung der Schaltzunge in der anderen Schaltstellung begrenzen. Dabei ist der Federweg der Schaltzunge 10 so bemessen, dass das dem Grundkörper zugewandte, bewegliche Lichtleiterende 1 genau auf das dem Grundkörper abgewandte, festliegende Lichtleiterende 1 ausgerichtet ist. Diese Schaltstellung ist in Fig. 2 dargestellt. Im Bereich ihres unfreien Endes weist die Schaltzunge 5 in ihrer Mitte eine Ausnehmung 12 auf, durch die in diesem Abschnitt ihr Querschnitt verringert wird. Dies verbessert die Nachgiebigkeit der Schaltzunge. Sie kann damit kürzer gehalten werden, wodurch ihre Steifigkeit in seitlicher Richtung erhöht wird.

## Patentansprüche

1. Schalter zum Trennen und Schliessen eines optischen Kontaktes zwischen zumindest zwei im wesentlichen zueinander fluchtenden Lichtleuterenden (1), von denen eines an einem feststehenden im Schalter befestigten Trägerteil (4) und eines an einer transversal bewegbaren, freiragenden, mit ihrem freien Ende dem Trägerteil (4) zugewandten auslenkbaren Schaltzunge (5) des Schalters gehalten ist, dadurch gekennzeichnet, dass die Schaltzunge (5) und das Trägerteil (4) in einem gemeinsamen Haltekörper (3) einstückig miteinander verbunden sind, dass die Schaltzunge (5) durch schlitzartige Freimachungen des Haltekörpers (3) gebildet ist, dass die beiden Lichtleiterenden (1) auf der gleichen Seite des Haltekörpers (3) aufliegen, dass der Haltekörper (3) aus Federblech gebildet ist, das an einer ebenen Auflagefläche (8) eines Grundkörpers (9) anliegt, und dass die Schaltzunge (5) in der geschlossenen Schaltstellung zumindest in der Nähe der Lichtleiterenden (1) an der Auflagefläche (8) anliegt.

2. Schalter nach Anspruch 1, dadurch gekennzeichnet, dass die Freimachung als U-förmig verlaufender Schlitz ausgebildet ist.

3. Schalter nach einem der Ansprüche 1 oder 2, dadurch gekennzeichnet, dass der Haltekörper (3) aus nichtmagnetisierbarem Material besteht und dass an die Schaltzunge (5) zumindest ein magnetisierbares Ankerteil (7) angesetzt ist.

4. Schalter nach Anspruch 3, dadurch gekennzeichnet, dass die Schaltzunge (5) an ihrem freien Ende seitliche, lappenförmige Verbreiterungen (10) aufweist, mit denen sie in der Einschaltstellung am Grundkörper (9) und in der anderen Schaltstellung an Anschlägen (11) des Schalters anliegt.

5. Schalter nach einem der vorhergehenden Ansprüche, dadurch gekennzeichnet, dass der Haltekörper (3) zu beiden Seiten mit parallelen, in Schaltrichtung übereinanderliegenden Lichtleitern (1) versehen ist, und dass der Schaltweg der Schaltzunge (5) gleich dem Achsabstand der Lichtleiterenden (1) ist.

## Revendications

1. Commutateur pour ouvrir ou fermer un contact optique entre au moins deux extrémités (1) de fibres optiques, sensiblement en alignement entre elles, dont l'une est maintenue dans un élément de support (4) fixe et fixé dans le commutateur, et dont l'autre est maintenue sur une languette de commutation (5) du commutateur, mobile transversalement et dégagée, et dont l'extrémité libre est voisine de l'élément de support, ladite languette étant susceptible d'être déviée, caractérisé par le fait que la languette de commutation (5) et l'élément de support (4) sont reliés entre eux, dans un corps de support (3), de manière à ne former qu'une pièce, que la languette de commutation (5) est constituée par des dégagements en forme de fentes du corps de support (3), que les deux extrémités (1) des fibres optiques portent sur le même côté du corps de support (3), que le corps de support (3) est constitué par de la tôle à ressort qui porte contre une surface d'appui plane (8) d'un corps de base (9), et que la languette de commutation (5) porte, dans la position de commutation fermée, au moins dans le voisinage des extrémités (1) des fibres optiques, contre la surface d'appui.

2. Commutateur selon la revendication 1, caractérisé par le fait que le dégagement est réalisé sous la forme d'une fente s'étendant selon un U.

3. Commutateur selon l'une des revendications 1 ou 2, caractérisé par le fait que le corps de support (3) est constitué avec un matériau non aimantable et que la languette (5) est pourvue d'au moins un élément d'un matériau (7) susceptible d'aimantation.

4. Commutateur selon la revendication 3, caractérisé par le fait que la languette de commutation (5) comporte à ses extrémités libres des élargissements (10) en forme de pattes par lesquelles elle porte, en position de fermeture, contre le corps de base (9) et, dans l'autre position de commutation, contre les butées (11) du commutateur.

5. Commutateur selon l'une des revendications précédentes, caractérisé par le fait que le corps de support (3) est pourvu, sur ses deux côtés, de fibres optiques (1) parallèles et superposées dans le sens de la commutation, et que la course de commutation de la languette (5) est égale à la distance entre les extrémités (1) des fibres optiques.

## Claims

1. A switch for making and breaking an optical contact between the ends of at least two light conductors (1) which are basically aligned with one another, one of which is supported on a fixed carrier member (4) fixed in the switch, and one is supported on a transversally movable, freely projecting, deflectable switching tongue (5) of the switch, the free end of which tongue faces towards the carrier member (4), characterised in that the switching tongue (5) and the carrier member (4) are integrally connected to one another in a common holding body (3); that the switching tongue (5) is formed by slot-shaped cut-outs in the holding body (3); that the ends of the two light conductors (1) are arranged on the same side of the holding body (3); that the holding body (3) consists of spring sheet which rests on a flat support surface (8) of a base (9); and that in the closed switching position, the switching tongue (5) rests on the support surface (8) at least in the vicinity of the ends of the light conductors (1).

2. A switch as claimed in Claim 1, characterised in that the cut-out consists of a U-shaped slot.

3. A switch as claimed in Claim 1 or 2, characterised in that the holding body (3) consists of non-magnetisable material, and that at least one magnetisable armature member (7) is attached to the switching tongue (5).

A switch as claimed in Claim 3, characterised in that, at its free end, the switching tongue (5) has lateral, lug-shaped widenings (10) with which it contacts the base (9) in the switched-on position and in the other switching position contacts stop means of the switch (11).

5. A switch as claimed in one of the preceding claims, characterised in that the holding body (3) is provided on both sides with parallel light conductors (1) which are arranged one above another in the switching direction, and that the switching path of the switching tongue (5) is equal to the axial distance between the ends of the light conductors (1).

0 075 917

FIG 1

11

10   12

8

6

7

5

10

11

2

4

1

3

9

FIG 2

1

1

1

5

4